# EUROPÄISCHE PATENTSCHRIFT

(11) **EP 2 217 820 B1**
(45) Veröffentlichungstag und Bekanntmachung des Hinweises auf die Patenterteilung: **09.05.2018**
(21) Anmeldenummer: 08855254.2
(22) Anmeldetag: 12.11.2008
(51) Int. Cl.: F16C 33/46

(54) **KÄFIG FÜR EIN WÄLZKÖRPERLAGER SOWIE VERFAHREN ZU DESSEN HERSTELLUNG**
CAGE FOR A ROLLING ELEMENT BEARING AND METHOD FOR THE PRODUCTION THEREOF
CAGE POUR PALIER À ROULEMENT ET SON PROCÉDÉ DE FABRICATION

(30) Priorität: 29.11.2007 DE 102007057550
(43) Veröffentlichungstag der Anmeldung: 18.08.2010
(73) Patentinhaber: Schaeffler Technologies AG & Co. KG, 91074 Herzogenaurach (DE)
(72) Erfinder: FANDRE, Hans-Jürgen, 97714 Oerlenbach (DE); TIETZ, Alexander, 97421 Schweinfurt (DE)
(86) Internationale Anmeldenummer: PCT/DE2008/001865
(87) Internationale Veröffentlichungsnummer: WO 2009/067980

(56) Entgegenhaltungen:
- EP-A- 1 803 952
- DE-B3-102006 006 146
- JP-A- 9 177 793
- JP-A- 2004 340 266

## Beschreibung

Die Erfindung betrifft einen Käfig für ein Wälzkörperlager mit einer Mehrzahl von Käfigtaschen zur Aufnahme der Wälzkörper, mit zwei Seitenringen und einer Mehrzahl von Querstegen, wobei die Querstege die Seitenringe derart verbinden, dass die Käfigtaschen gebildet werden, wobei die Käfigtaschen ausgefräste oder ausgebohrte Eckbereiche - nachfolgend zusammenfassend als ausgefräste Eckbereich bezeichnet - aufweisen, und wobei die Eckbereiche in einer Schnittebene senkrecht zur Drehachse des Käfigs einen radialen Fräsverlauf in Richtung der Drehachse aufweisen, der zumindest in einem Teilabschnitt gegenüber einen durch den Teilabschnitt und die Drehachse gelegten Radialvektor geneigt ausgebildet ist sowie ein Verfahren zu dessen Herstellung.

Käfige für Wälzkörperlager werden eingesetzt, um die Wälzkörper im Betrieb zu führen und voneinander beabstandet zu halten. Eine mögliche Bauform von Käfigen ist der sogenannte Massivkäfig, der einstückig ausgebildet ist. Die Herstellung von Massivkäfigen umfasst üblicherweise ein Räumen, Ausbohren oder Ausfräsen der Käfigtaschen in einem Käfiggrundkörper. Die Käfigtaschen sind oftmals als rechteckige, quadratische oder trapezförmige Fenster in dem Käfig ausgebildet.

Beispielsweise offenbart die Druckschrift DE 10 2006 006 146 B3 ein Verfahren zur Herstellung eines Massivkäfigs eines Wälzlagers und einen Wälzlagerkäfig. Bei dem Verfahren wird zunächst eine Anzahl aus der Radialrichtung betrachtet viereckige Aufnahmetaschen für Wälzkörper in einem ersten Fräsprozess in einen Käfiggrundkörper eingebracht und dann mit einem Bohr- oder Fräswerkzeug Hinterstiche für die Wälzkörper in den Ecken der viereckigen Kontur der Aufnahmetaschen erzeugt. Mit dem Ziel, die Anbindungsfläche zwischen Steg und Käfigring zu vergrößern, wird in der Druckschrift vorgeschlagen, das Bohr- oder Fräswerkzeug so zu führen, dass in den Eckbereichen in einer Querschnittsebene senkrecht zur Drehachse des Wälzlagerkäfigs ein gekrümmtes Fräsprofil erzeugt wird.

In der Druckschrift EP 1 803 952 A1 wird ein Käfig für ein Zylinderrollenlager beschrieben und weist zwei Seitenringe sowie eine Mehrzahl an Querstegen auf, wobei die Querstege mit den beiden Seitenringen verbunden sind. Weiterhin werden Käfigtaschen beschrieben, die zwischen den Querstegen angeordnet sind und an den Eckbereichen Hinterstiche aufweisen. Die Hinterstiche erstrecken sich hierbei parallel zu den Seitenflächen der Querstege entlang.

Aus der Druckschrift JP 09177793 A ist ein Käfig - bestehend aus einem Harzmaterial - für ein Zylinderrollenlager bekannt und weist ebenfalls Käfigtaschen mit vier Eckbereichen auf. An den Eckbereichen sind Hinterstiche angeordnet, die sich an Querstreben des Käfigs entlang erstrecken.

Die Druckschrift JP 2004340266 A, die wohl den nächstkommenden Stand der Technik bildet, zeigt zusätzliche Gestaltungsmöglichkeiten der Querstege und Hinterstiche. So sind beispielsweise keilförmige oder bogenförmige Querstege beschrieben, die mittels eines Bohrwerkzeugs eingearbeitet werden.

Der Erfindung liegt die Aufgabe zu Grunde, einen Käfig für ein Wälzkörperlager sowie ein Verfahren zu dessen Herstellung vorzuschlagen, wobei sich der Käfig entweder durch eine erhöhte Wälzkörperanzahl oder durch eine verbesserte Belastbarkeit auszeichnet.

Diese Aufgabe wird durch einen Käfig mit den Merkmalen des Anspruchs 1 sowie mit einem Verfahren mit den Merkmalen des Anspruchs 9 gelöst. Bevorzugte oder vorteilhafte Ausführungsformen der Erfindung ergeben sich aus den Unteransprüchen, der nachfolgenden Beschreibung sowie den beigefügten Figuren.

Der Käfig ist für ein Wälzkörperlager geeignet und/oder ausgebildet, wobei das Wälzkörperlager beispielsweise als Kegelrollen-, Tonnen-, Zylinderrollen- oder auch als Pendelrollenlager ausgebildet sein kann. Bevorzugt ist das Wälzkörperlager als ein Bahnlager für den Einsatz in Getrieben oder Radlagern von Schienenfahrzeugen oder bei anderen insbesondere schnelldrehenden Wälzlagern vorgesehen. Der Käfig weist zwei Seitenringe bzw. - scheiben und eine Mehrzahl von Querstegen auf, wobei die Querstege die Seitenringe derart verbinden, dass Käfigtaschen zur Aufnahme von Wälzkörpern des Wälzkörperlagers gebildet werden. Die Form der Käfigtaschen ist in der Grundform viereckig und kann - je nach Wälzkörperart - quadratisch, trapezförmig oder rechteckig geschaffen sein.

Die Käfigtaschen weisen in den Ecken des viereckigen Aufbaus Eckbereiche auf, welche durch Fräsen oder Bohren in den Käfiggrundkörper eingebracht sind. Zur Vereinfachung der Darstellung wird nachfolgend das Bohren und Fräsen zusammenfassend nur noch mit fräsen, gefräst, Fräsvorgang, etc., bezeichnet, die Erfindung erstreckt sich jedoch auch auf Käfige mit gebohrten Eckbereichen.

Zum Zwecke der Darstellung wird eine Schnittebene definiert, welche senkrecht zur Drehachse des Käfigs ausgebildet ist und durch die Eckbereiche, welche auf einer gemeinsamen axialen Seite des Käfigs angeordnet sind, verläuft. In dieser Schnittebene weisen die Eckbereiche einen radial ausgerichteten Fräsverlauf auf, der von radial außen nach radial innen gerichtet ist. Zumindest in einem Teilabschnitt des Fräsverlaufs ist dieser gegenüber einem Radialvektor geneigt ausgerichtet, wobei der Radialvektor durch den genannten Teilabschnitt und die Drehachse in der Schnittebene verläuft.

Der Teilabschnitt kann dabei als gerader oder gekrümmter Teilabschnitt ausgebildet sein.

Im Rahmen der Erfindung wird vorgeschlagen, dass der Fräsverlauf in dem Teilabschnitt relativ zu dem Radialvektor in Richtung der offen angrenzenden Käfigtasche bzw. der Käfigtasche, zu der der Eckbereich gehört, geneigt ausgebildet ist. Beispielsweise verläuft der Fräsverlauf von radial außen zur Drehachse, kreuzt dabei den Radialvektor und verläuft auf der Seite der angrenzenden Käfigtasche weiter.

Anders ausgedrückt wird der Fräsverlauf so gelegt, dass gegenüber dem Radialvektor nach radial innen Material des Käfiggrundkörpers im Bereich der angrenzenden Käfigtasche verbleibt und auf diese Weise ein erhöhter Anbindungsquerschnitt zwischen Quersteg und Seitenring sowie eine höhere Stabilität des Querstegs erreicht wird.

Eine Überlegung der Erfindung ist es, dass bei dem bekannten Stand der Technik zwar darauf geachtet wird, den Anbindungsquerschnitt zwischen Quersteg und Seitenring in einem radial äußeren Bereich zu verstärken, jedoch kein Augenmerk auf den radial inneren Bereich gerichtet wird. Dementsprechend wird im Rahmen der Erfindung vorgeschlagen, im radial inneren Bereich den Querschnitt der Querstege durch die beschriebene konstruktive Maßnahme zu vergrößern. Das durch die konstruktive Maßnahme verbesserte Belastungsverhalten des Käfigs kann zum einen genutzt werden, um einen Käfig bei gleicher Anzahl der Wälzkörper in seiner Belastbarkeit zu verbessern, oder einen Käfig bei Beibehaltung seiner Belastbarkeit in der Anzahl der Käfigtaschen zu erhöhen.

Bei einer bevorzugten Realisierung der Erfindung ist der Käfig als ein Massivkäfig, insbesondere als ein Messingkäfig ausgebildet. Der Massivkäfig ist insbesondere einstückig realisiert.

Erfindungsgemäß ist der Teilabschnitt als ein radial innerer Endabschnitt des Fräsverlaufes ausgebildet. Die Erfindung fokussiert hierbei auf die Verbesserung der Belastbarkeit in dem radial inneren Bereich, wohingegen der dazu radial äußere Anfangsabschnitt zylindrisch ausgebildet ist.

Aus fertigungstechnischen Gründen weist der Teilabschnitt eine konstante Neigung auf, bei alternativen Ausführungsformen nicht gemäß der Erfindung ist es jedoch auch möglich, dass der Teilabschnitt eine Krümmung darstellt.

Bei einer Weiterbildung der Erfindung ist der zu dem radial inneren Endabschnitt angeordnete Anfangsabschnitt des Fräsverlaufs parallel zu einem in der Schnittebene und durch die Mitte der Käfigtasche und der Drehachse verlaufenden ersten Mittelvektor ausgerichtet. Diese Ausbildung hat den fertigungstechnischen Vorteil, dass die zu bearbeitende Käfigtasche hinsichtlich ihrer Mitte positioniert werden kann und die Fräsungen dann mit einer linearen und/oder geraden Bewegung durchführbar sind.

Bei einer alternativen Weiterbildung der Erfindung ist der Fräsverlauf in dem beschriebenen Anfangsabschnitt parallel zu einem in der Schnittebene und durch den Anfangsabschnitt und der Drehachse verlaufenden zweiten Mittelvektor ausgerichtet. Der Fräsvorgang verläuft bei dieser Ausführungsform somit genau in radialer Richtung.

Bei einer bevorzugten Realisierung der Erfindung erstreckt sich der Endabschnitt über mindestens 10%, vorzugsweise mindestens 20% und insbesondere über mindestens 30% und/oder über maximal 90%, vorzugsweise maximal 80% und insbesondere maximal 70% der radialen Ausdehnung des Fräsverlaufs entlang des Radialvektors.

In einer möglichen konstruktiven Realisierung sind die Querstege zumindest im Bereich des Teilabschnitts in der weiter oben beschriebenen Schnittebene mit einer konstanten oder sogar mit einer in Richtung der Drehachse größer werdenden Breite ausgebildet. Diese Ausprägung ist letztlich das Ergebnis der erfindungsgemäßen Gestaltung des Fräsverlaufs.

Ein weiterer Gegenstand der Erfindung betrifft ein Verfahren zur Herstellung des zuvor beschriebenen Käfigs bzw. nach einem der vorhergehenden Ansprüche, wobei die gefrästen Eckbereiche mittels eines Fräswerkzeugs in einen Käfiggrundkörper eingebracht werden.

Die Führungsrichtung des Fräswerkzeugs ist bei einer möglichen Ausbildung der Erfindung in Richtung der Drehachse gegenüber dem zuvor beschriebenen Radialvektor in zuvor beschriebenen Weise zu der Käfigtasche geneigt, welche gerade bearbeitet wird. Das Fräswerkzeug wird somit bewusst schräg zu dem Radialvektor geführt, so dass der Querschnitt der Querstege im radial inneren Bereich gegenüber dem Stand der Technik verbreitert sind. Erfindungsgemäß ist das Fräswerkzeug mit einer zylinderförmigen und konusförmigen Wirkfläche ausgebildet, welche den Fräsverlauf in dem Käfig erzeugt.

Gemäß der Erfindung weist das Fräswerkzeug einen konusförmigen Werkzeugabschnitt auf, wobei der Werkzeugabschnitt zur Erzeugung des Teil- oder Endabschnitts in dem Käfiggrundkörper ausgebildet ist. Bei dieser Alternative kann das Fräswerkzeug im Prinzip parallel zu dem Radialvektor oder zu dem Mittelvektor geführt werden.

Bei einer weiteren bevorzugten Ausbildung der Erfindung wird jedoch auch dieses Fräswerkzeug in der beschriebenen Art gegenüber dem Radialvektor angestellt, um sowohl durch die Werkzeugform als auch durch die Werkzeugführung einen verbreiterten Endabschnitt der Querstege zu erhalten.

Weitere Merkmale, Vorteile und Wirkungen der Erfindung ergeben sich aus der nachfolgenden Beschreibung bevorzugter Ausführungsbeispiele. Dabei zeigen:
- Figur 1: eine schematische Draufsicht auf einen Ausschnitt eines Käfigs im Bereich einer Käfigtasche als ein erstes Ausführungsbeispiel der Erfindung;
- Figur 2: einen Detailausschnitt der Käfigtasche in Figur 1 entlang der Schnittlinie A - A;
- Figur 3: einen weiteren Detailausschnitt der Käfigtasche in Figur 1 entlang der Schnittlinie D - D;
- Figur 4: eine schematische dreidimensionale Darstellung von radial innen auf den Käfig in Figur 1;
- Figur 5: ein Ausführungsbeispiel nicht gemäß der Erfindung in gleicher Darstellung wie in Figur 2;
- Figur 6: das zweite Ausführungsbeispiel in Figur 5 in der Darstellung der Figur 3;
- Figur 7: das Ausführungsbeispiel in Figur 5 bzw. 6 in der Darstellung der Figur 4.

Einander entsprechende Teile oder Bereiche sind jeweils mit den gleichen Bezugszeichen versehen.

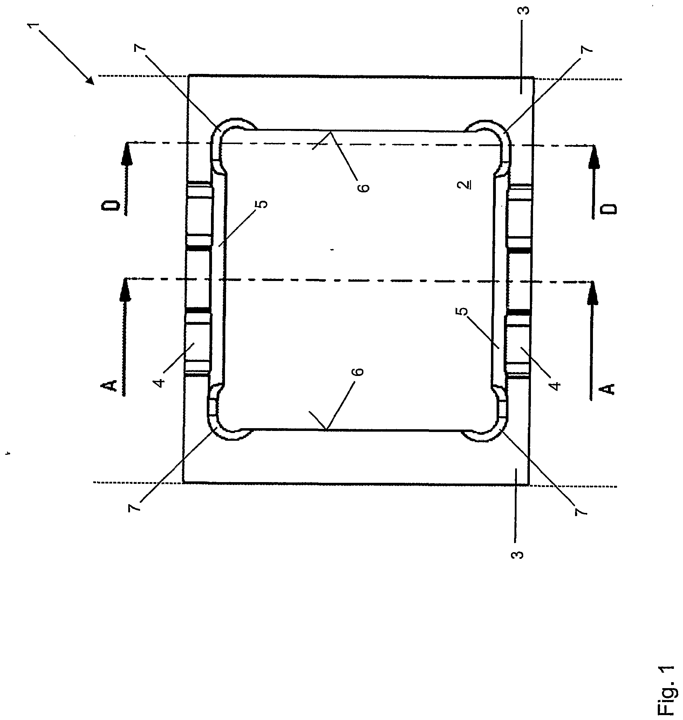

Die Figur 1 zeigt in einer schematischen Draufsicht einen Ausschnitt eines Käfigs 1 im Bereich einer Käfigtasche 2 als ein erstes Ausführungsbeispiel der Erfindung. Der Käfig 1 ist als ein Massivmessingkäfig, beispielsweise für ein Bahnwälzlager ausgebildet. Der Käfig 1 ist einstückig realisiert und weist randseitig Seitenringe 3 auf, welche über Querstege 4 miteinander verbunden sind, so dass die Käfigtaschen 2 umschlossen werden.

Die Käfigtasche 2 hat einen im wesentlichen viereckigen oder quadratischen Grundriss und zeigt im Bereich der Querstege 4 Anlaufflächen 5 für die Wälzkörper, insbesondere für Zylinderrollen (nicht dargestellt) und als axiale Begrenzungen Seitenwände 6. Die Eckbereiche 7 der Käfigtasche sind durch Ausfräsen eines Käfiggrundkörpers gebildet und erstrecken sich zwischen den Anlaufbereichen 5 und den Seitenwänden 6. In der Darstellung in Figur 1 sind die Eckbereiche 7 in Draufsicht teilkreisförmig ausgebildet und optional in Richtung der Anlaufflächen 5 bzw. Seitenwände 6 tangential verlängert.

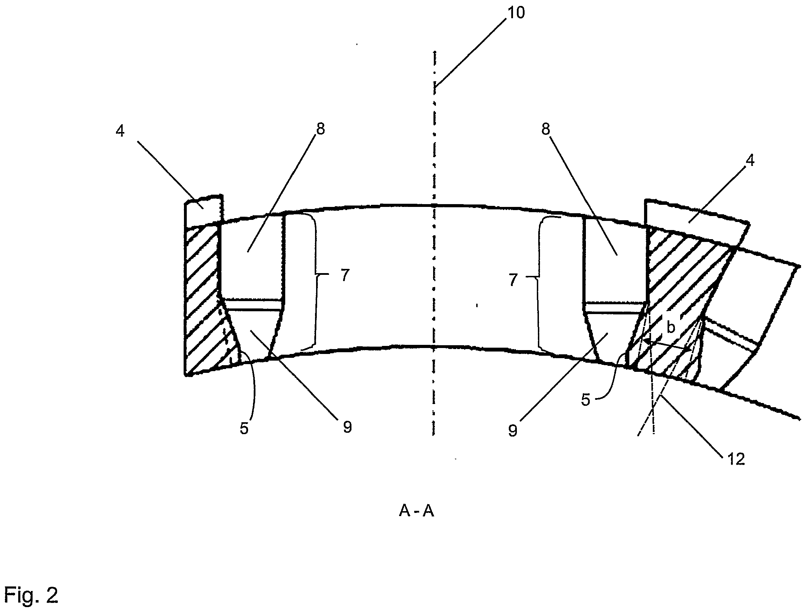

Die Figur 2 zeigt einen schematischen Querschnitt entlang der Querschnittlinie A - A in der Figur 1 in einer schematischen Darstellung, wobei nochmals die Querstege 4 mit den Anlaufbereichen 5 zu erkennen sind. Wie sich aus der Figur 2 entnehmen lässt, sind die Eckbereiche 7 aus einem zylinderförmigen Anfangsabschnitt 8 und einem daran anschließenden konisch zulaufenden Endabschnitt 9, welcher nach radial innen geöffnet ist, gebildet. Der zylinderförmige Anfangsabschnitt 8 ist parallel zu einem ersten Mittelvektor 10 ausgerichtet, welcher durch die Mitte der Käfigtasche 2 sowie durch die Drehachse (nicht dargestellt) des Käfigs 1 führt.

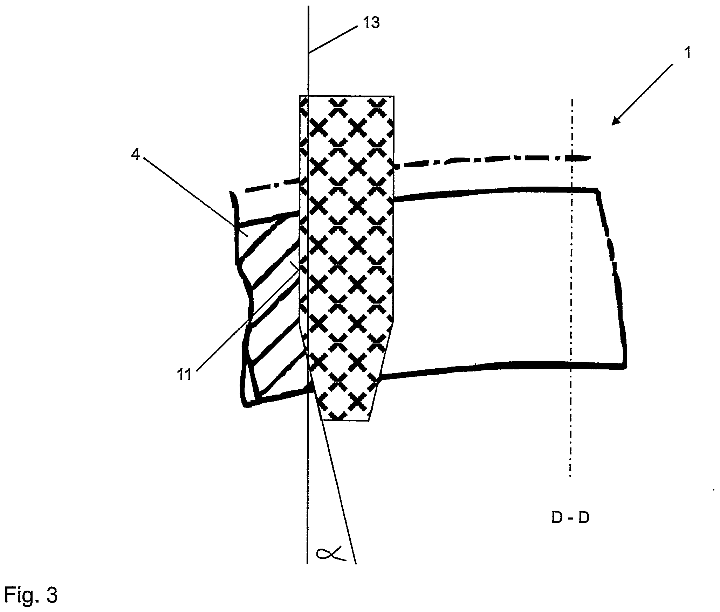

Bei der Fertigung kann der Käfig 1 in einfacher Weise ausgerichtet und die Eckbereiche 7 einer Käfigtasche 2 beispielsweise durch zeitgleiches Einfräsen gebildet werden, wobei die Fräsrichtung parallel zu dem ersten Mittelvektor 10 ausgerichtet ist. Der Endabschnitt 9 ist dagegen - wie es sich auch aus der Figur 3 ergibt -, die einen schematischen Querschnitt entlang der Schnittlinie D - D zeigt, im Fräsverlauf 11 abgewinkelt zu dem Fräsverlauf 11 im Bereich des Anfangsabschnitts 8 ausgebildet. Durch diese Abwinklung wird erreicht, dass im radial inneren Bereich die Breite b des Querstegs 4 größer bemessen bleibt, als wenn auch der Endabschnitt 9 durch eine Fortsetzung des Anfangsabschnitts 8 in den Käfiggrundkörper eingefräst wird. Zur Bearbeitung wird beispielsweise ein Fräswerkzeug mit einem konisch zulaufenden Fräser verwendet, so dass Anfangsabschnitt 8 und Endabschnitt 9 in dem gleichen Fräsvorgang zeit- und damit kostengünstig eingebracht werden kann. Als Vergleich ist in der Figur 2 der Verlauf des Anfangsabschnitts 8 mit gestrichelten Linien 12 verlängert, um die Verbreiterung im Bodenbereich des Querstegs 4 durch die Verwendung des konischen Fräsers zu illustrieren.

Der Fräsverlauf 11 im Endabschnitt 9 ist dabei so geneigt, dass diese gegenüber einem Radialvektor 13, welcher durch die Drehachse des Käfigs 1 und im Endabschnitt 9 an einer beliebigen Stelle verläuft, in Richtung der Drehachse hin zu der Käfigtasche 2 geneigt, was in der Figur 3 durch den Winkel α visualisiert ist.

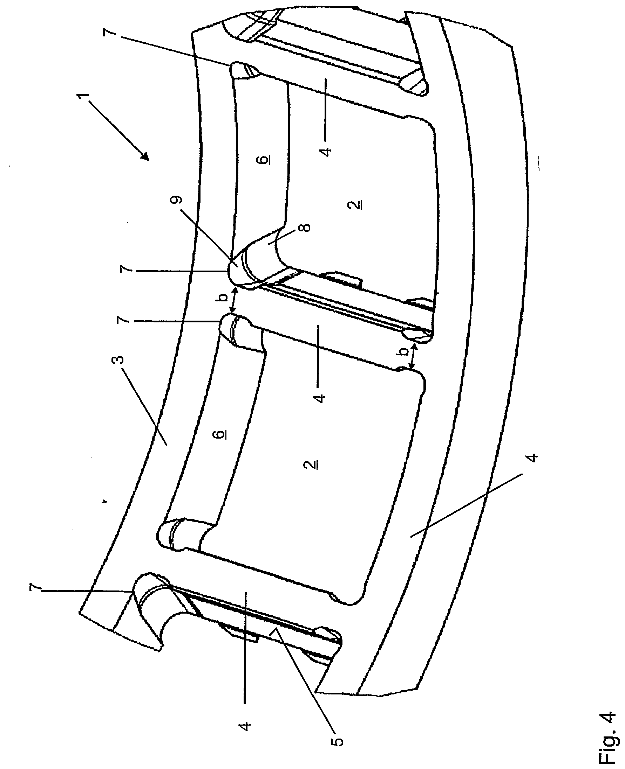

Die Figur 4 zeigt den Käfig in Figur 1 in einer schematischen, dreidimensionalen Darstellung in einer Ansicht von radial innen, wobei zwei Käfigtaschen 2 gezeigt sind, welche über einen gemeinsamen Quersteg 4 benachbart zueinander angeordnet sind. Durch den gewählten Fräsverlauf 11 der Eckbereiche 7 sind der Anfangsabschnitt 8 und der Endabschnitt 9 so ausgebildet, dass die Breite des Querstegs 4 im Bereich der Eckbereiche 7 wesentlich breiter als zum Beispiel im Falle der gestrichelten Linie 12 in Figur 2 ausgebildet ist.

Durch diese Verbreiterung der Querstege 4 im radialinneren Bereich des Käfigs 1 wird zum einen eine verbesserte Anbindung der Querstege 4 an die Seitenringe 3 und zum anderen eine Verbesserung der Belastbarkeit der Querstege 4 selbst erreicht.

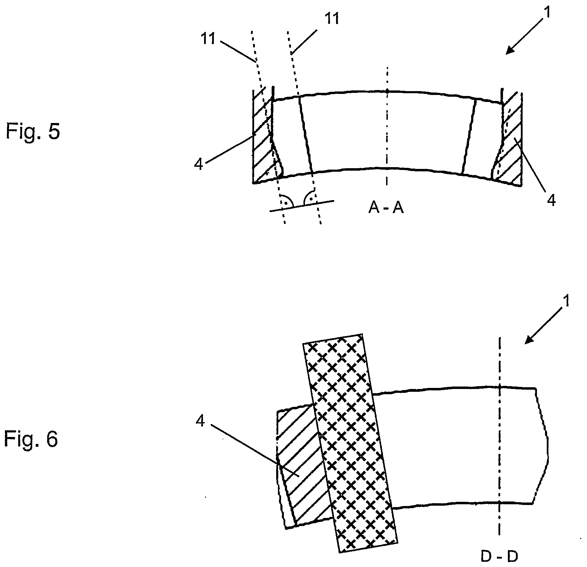

Die Figur 5 zeigt ein Ausführungsbeispiel nicht gemäß der Erfindung in gleicher Darstellung wie in der Figur 2. Statt eines konischen Fräsers wird ein zylinderförmiger oder ein gerader Fräser eingesetzt, welcher jedoch um den Winkel alpha (α) gegenüber dem Radialvektor 13 in gleicher Weise geneigt geführt wurde wie der Endabschnitt 9 in den Figuren 1 bis 4. Die Figur 6 visualisiert in der gleichen Darstellung wie in der Figur 3 die Führung des geraden Fräsers. Auch bei dieser Ausführungsform nicht gemäß der Erfindung wird erreicht, dass die Breite b radial innen an den Eckbereiche 7 der Querstege 4 gegenüber der erzielbaren Breite bei einem parallel zu dem Mittelvektor 10 oder dem Radialvektor geführten, geraden Fräser wesentlich vergrößert ist.

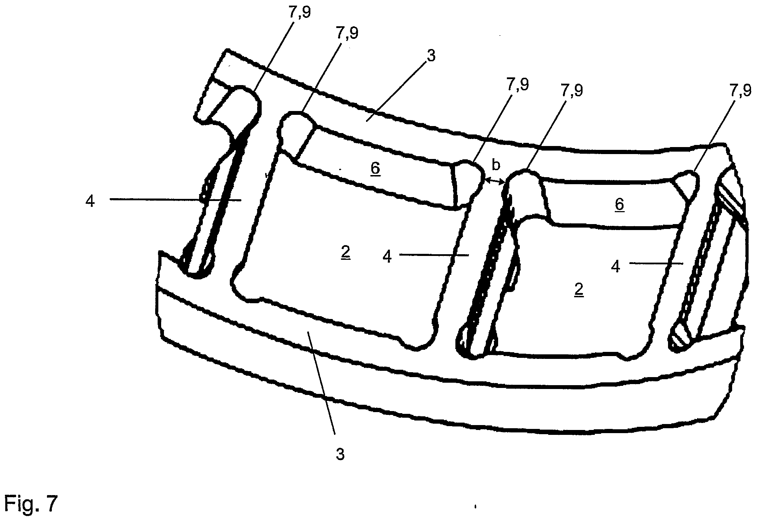

Die Figur 7 zeigt den Käfig 1 des zweiten Ausführungsbeispiels nicht gemäß der Erfindung in gleicher Darstellung wie in der Figur 1, jedoch mit Eckbereichen 7, welche gemäß den Figuren 5 und 6 bearbeitet sind. Es ist auch möglich, die beiden Ausführungsformen zu verbinden und einen Fräser mit einem in Richtung der Drehachse des Käfigs 1 im Durchmesser konvergierenden Abschnitt gemäß dem ersten Ausführungsbeispiel zu verwenden und dessen Führungsrichtung gemäß dem zweiten Ausführungsbeispiel zu neigen.

### Bezugszeichenliste

- 1: Käfig
- 2: Käfigtasche
- 3: Seitenring
- 4: Quersteg
- 5: Anlauffläche
- 6: Seitenwände
- 7: Eckbereich
- 8: Anfangsabschnitt
- 9: Endabschnitt
- 10: Mittelvektor
- 11: Fräsverlauf
- 12: gestrichelte Linie
- 13: Radialvektor

## Patentansprüche

1. Käfig (1) für ein Wälzkörperlager
mit einer Mehrzahl von Käfigtaschen (2) zur Aufnahme der Wälzkörper, mit zwei Seitenringen (3) und einer Mehrzahl von Querstegen (4), wobei die Querstege (4) die Seitenringe (3) derart verbinden, dass die Käfigtaschen (2) gebildet werden,
wobei die Käfigtaschen (2) ausgefräste oder ausgebohrte Eckbereiche (7) - nachfolgend zusammenfassend als ausgefräste Eckbereiche bezeichnet - aufweisen,
wobei die Eckbereiche (7) in einer Schnittebene senkrecht zur Drehachse des Käfigs (1) einen radialen Fräsverlauf (11) in Richtung der Drehachse aufweisen, der zumindest in einem Teilabschnitt gegenüber einen durch den Teilabschnitt und die Drehachse gelegten Radialvektor (13) geneigt ausgebildet ist,
wobei der Teilabschnitt als radialinnerer Endabschnitt (9) ausgebildet ist, wobei der Fräsverlauf (11) mittels eines Fräswerkzeugs erzeugt wird und in dem Endabschnitt (9) in Richtung der Käfigtasche (2) geneigt ausgebildet ist,
**dadurch gekennzeichnet,**
**dass** jeder Eckbereich (5) aus einem zylinderförmigen Anfangsabschnitt (8) und einem daran anschließenden konischen Endabschnitt (9), welcher nach radial innen geöffnet ist, gebildet ist.

2. Käfig (1) nach Anspruch 1, **dadurch gekennzeichnet, dass** der Käfig (1) als ein Massivkäfig ausgebildet ist.

3. Käfig (1) nach Anspruch 1 oder 2, **dadurch gekennzeichnet, dass** der gesamte Fräsverlauf (11) in Richtung der Käfigtasche (2) geneigt ausgebildet ist.

4. Käfig (1) nach Anspruch 3, **dadurch gekennzeichnet, dass** der Endabschnitt (9) eine konstante Neigung aufweist.

5. Käfig (1) nach Anspruch 3 oder 4, **dadurch gekennzeichnet, dass** ein Anfangsabschnitt (8) des Fräsverlaufs (11) parallel zu einem in der Schnittebene durch die Mitte der Käfigtasche (2) und der Drehachse verlaufenden ersten Mittelvektor (10) ausgerichtet ist.

6. Käfig (1) nach Anspruch 3 oder 4, **dadurch gekennzeichnet, dass** ein Anfangsabschnitt (8) des Fräsverlaufs (11) parallel zu einem in der Schnittebenen und durch den Anfangsabschnitt (8) und der Drehachse verlaufenden zweiten Mittelvektor ausgerichtet ist.

7. Käfig (1) nach einem der vorhergehenden Ansprüche, **dadurch gekennzeichnet, dass** der Endabschnitt sich über mindestens 10%, vorzugsweise mindestens 20% und insbesondere mindestens 30% und/oder über maximal 90%, vorzugsweise maximal 80% und insbesondere maximal 70% der radialen Ausdehnung des Fräsverlaufs (11) entlang des Radialvektors (13) erstreckt.

8. Käfig (1) nach einem der vorhergehenden Ansprüche, **dadurch gekennzeichnet, dass** der Quersteg (4) zumindest im Bereich des Endabschnitts (9) in der Schnittebene eine konstante oder in Richtung der Drehachse ansteigende Breite (b) aufweist.

9. Verfahren zur Herstellung des Käfigs (1) nach einem der vorhergehenden Ansprüche, **gekennzeichnet durch** einen Fräs- oder Bohrvorgang - nachfolgend zusammenfassend als Fräsvorgang bezeichnet -, wobei die gefrästen Eckbereiche (7) durch das Fräswerkzeug in einen Käfiggrundkörper eingebracht werden.

10. Verfahren nach Anspruch 9, **dadurch gekennzeichnet, dass** das Fräswerkzeug bei dem Fräsvorgang mit seiner Wirkfläche in Richtung der Drehachse gegenüber dem Radialvektor (13) zu der Käfigtasche (2) geneigt ist.

## Claims

1. Cage (1) for a rolling element bearing
with a plurality of cage pockets (2) for accommodating the rolling elements, with two side rings (3) and a plurality of crosspieces (4), the crosspieces (4) connecting the side rings (3) in such a way as to form the cage pockets (2),
the cage pockets (2) comprising milled-out or drilled-out corner regions (7), hereinafter collectively referred to as milled-out corner regions,
the corner regions (7), in a section plane perpendicular to the axis of rotation of the cage (1), comprising a radial milling profile (11) in the direction of the axis of rotation which at least in a subportion is inclined relative to a radial vector (13) passing through the subportion and the axis of rotation,
the subportion taking the form of a radially inner end portion (9),
the milling profile (11) being produced by means of a milling tool and in the end portion (9) being inclined in the direction of the cage pocket (2), **characterized in that** each corner region (5) is formed of a cylindrical initial portion (8) and an adjacent conical end portion (9), which is open radially on the inside.

2. Cage (1) according to Claim 1, **characterized in that** the cage (1) takes the form of a solid cage.

3. Cage (1) according to Claim 1 or 2, **characterized in that** the entire milling profile (11) is inclined in the direction of the cage pocket (2).

4. Cage (1) according to Claim 3, **characterized in that** the end portion (9) comprises a constant inclination.

5. Cage (1) according to Claim 3 or 4, **characterized in that** an initial portion (8) of the milling profile (11) is oriented parallel to a first central vector (10) extending in the section plane through the middle of the cage pocket (2) and the axis of rotation.

6. Cage (1) according to Claim 3 or 4, **characterized in that** an initial portion (8) of the milling profile (11) is oriented parallel to a second central vector extending in the section plane and through the initial portion (8) and the axis of rotation.

7. Cage (1) according to one of the preceding claims, **characterized in that** the end portion extends over at least 10%, preferably at least 20% and in particular at least 30% and/or over at most 90%, preferably at most 80% and in particular at most 70% of the radial extent of the milling profile (11) along the radial vector (13).

8. Cage (1) according to one of the preceding claims, **characterized in that** at least in the region of the end portion (9) in the section plane the crosspiece (4) comprises a width (b) which is constant or increases in the direction of the axis of rotation.

9. Method of producing the cage (1) according to one of the preceding claims, **characterized by** a milling or drilling process, hereinafter collectively referred to as a milling process, the milled corner regions (7) being introduced into a main cage body by the milling tool.

10. Method according to Claim 9, **characterized in that** in the milling process the milling tool is inclined with its working face in the direction of the axis of rotation relative to the radial vector (13) towards the cage pocket (2).

## Revendications

1. Cage (1) pour un palier à roulement avec une multiplicité de fosses de cage (2) destinées à contenir les corps de roulement, avec deux bagues latérales (3) et une multiplicité de nervures transversales (4), dans laquelle les nervures transversales (4) relient les bagues latérales (3), de telle manière que les fosses de cage (2) soient formées,
dans laquelle les fosses de cage (2) présentent des zones d'angle fraisées ou forées (7) - ci-après appelées globalement des zones d'angle fraisées -,
dans laquelle les zones d'angle (7) présentent dans un plan de coupe perpendiculaire à l'axe de rotation de la cage (1) une face de fraisage radiale (11) en direction de l'axe de rotation, qui est inclinée au moins dans une région partielle par rapport à un vecteur radial (13) tracé à travers la région partielle et l'axe de rotation, dans laquelle la région partielle est réalisée sous la forme d'une partie terminale radialement intérieure (9), dans laquelle la face de fraisage (11) est produite au moyen d'un outil de fraisage et est réalisée de façon inclinée en direction de la fosse de cage (2) dans la partie terminale (9),
**caractérisée en ce que** chaque zone d'angle (5) est formée d'une partie initiale cylindrique (8) et d'une partie terminale conique (9) qui s'y raccorde, et qui est ouverte radialement vers l'intérieur.

2. Cage (1) selon la revendication 1, **caractérisée en ce que** la cage (1) est constituée par une cage massive.

3. Cage (1) selon la revendication 1 ou 2, **caractérisée en ce que** toute la face de fraisage (11) est inclinée en direction de la fosse de cage (2).

4. Cage (1) selon la revendication 3, **caractérisée en ce que** la partie terminale (9) présente une inclinaison constante.

5. Cage (1) selon la revendication 3 ou 4, **caractérisée en ce qu'**une partie initiale (8) de la face de fraisage (11) est orientée parallèlement à un premier vecteur médian (10) s'étendant dans le plan de coupe à travers le milieu de la fosse de cage (2) et l'axe de rotation.

6. Cage (1) selon la revendication 3 ou 4, **caractérisée en ce qu'**une partie initiale (8) de la face de fraisage (11) est orientée parallèlement à un deuxième vecteur médian s'étendant dans le plan de coupe et à travers la partie initiale (8) et l'axe de rotation.

7. Cage (1) selon l'une quelconque des revendications précédentes, **caractérisée en ce que** la partie terminale s'étend sur au moins 10 %, de préférence au moins 20 % et en particulier au moins 30 % et/ou au maximum sur 90 %, de préférence au maximum sur 80 % et en particulier au maximum sur 70 % de l'extension radiale de la face de fraisage (11) le long du vecteur radial (13).

8. Cage (1) selon l'une quelconque des revendications précédentes, **caractérisée en ce que** la nervure transversale (4) présente au moins dans la région de la partie terminale (9) dans le plan de coupe une largeur (b) constante ou croissante en direction de l'axe de rotation.

9. Procédé de fabrication de la cage (1) selon l'une quelconque des revendications précédentes, **caractérisé par** une opération de fraisage ou de forage - appelée globalement ci-après opération de fraisage -, dans lequel on pratique les zones d'angle fraisées (7) dans un corps de base de cage au moyen de l'outil de fraisage.

10. Procédé selon la revendication 9, **caractérisé en ce que** lors de l'opération de fraisage l'outil de fraisage avec sa face active en direction de l'axe de rotation est incliné par rapport au vecteur radial (13) vers la fosse de cage (2).
